# EUROPÄISCHE PATENTSCHRIFT

(11) **EP 2 876 340 B1**
(45) Veröffentlichungstag und Bekanntmachung des Hinweises auf die Patenterteilung: **11.01.2017**
(21) Anmeldenummer: 13194121.3
(22) Anmeldetag: 22.11.2013
(51) Int. Cl.: F16K 31/122, F16K 1/38, B05B 15/02

(54) **Absperrventil, insbesondere für eine Lackieranlage**
Shut-off valve, in particular for a painting system
Vanne d'arrêt, notamment pour une installation de peinture

(43) Veröffentlichungstag der Anmeldung: 27.05.2015
(73) Patentinhaber: LacTec GmbH, 63110 Rodgau (DE)
(72) Erfinder: Pohl, Stefan, 63110 Rodgau (DE); Käufer, Stefan, 63329 Egelsbach (DE); Weiß, Volker, 60437 Frankfurt (DE)
(74) Vertreter: Tergau & Walkenhorst Patentanwälte - Rechtsanwälte

(56) Entgegenhaltungen:
- EP-A2- 1 203 908
- WO-A2-2004/081428
- WO-A2-2005/038320
- DE-A1-102005 033 191
- US-A1- 2006 197 049

## Beschreibung

Die Erfindung bezieht sich auf ein Absperrventil, insbesondere zur Absperrung eines lackführenden Kanals in einer Lackieranlage, mit einem pneumatisch über einen druckbetätigten Hubkolben von einer Schließ- in einer Öffnungsposition bewegbaren Absperrkörper. Sie betrifft weiter eine Lackieranlage, wobei die Arbeitsposition eines zur Begrenzung des Hubwegs des Hubkolbens in dessen Öffnungsrichtung gesehen vorgesehenen Kolbenanschlags einstellbar ist.

Ein derartiges Absperrventil ist beispielsweise aus der EP 1 203 908 A2, aus der WO 2004/081428 A2 oder der WO 2005/038320 A2 bekannt.

In modernen Beschichtungsanlagen, insbesondere in Lackieranlagen, wird die Lackierung von Gegenständen, beispielsweise von Karosserien von Kraftfahrzeugen, überwiegend oder gar ausschließlich automatisch und maschinell ausgeführt. Bei derartigen Prozessen wird mit Hilfe von automatisch gesteuerten Applikationseinrichtungen Lack auf den zu lackierenden Gegenstand aufgetragen. In vielen Fällen soll dabei mit dergleichen Applikationseinrichtung nicht nur ein Lack mit einer bestimmten Farbe appliziert werden. Vielmehr ist es gewöhnlich erforderlich oder erwünscht, durch die Applikationseinrichtung Lacke verschiedener Farben nacheinander aufzutragen.

Zu diesem Zweck sind üblicherweise Farbwechsler oder Farbwechselvorrichtungen vorgesehen, die einen zentralen Farbkanal aufweisen, der mit der Applikationseinrichtung verbunden ist, und die eine Vielzahl von Farbzuleitungen aufweisen, über die unterschiedliche Lacke mit unterschiedlicher Farbe dem Farbkanal zugeleitet werden können. Die Zufuhr der Farbe durch diese Farbzuleitungen wird üblicherweise durch - in der Regel pneumatisch ansteuerbare - Ventile geregelt. Dazu sind in einem Ventilblock des Farbwechslers Ventilbohrungen vorgesehen, in die diese Ventile eingesetzt werden können. Die Ventile geben bei Ansteuerung, also bedarfsweise, den Durchgang von der jeweiligen Farbzuleitung zum zentralen Farbkanal frei. Auf diese Weise kann jeweils der Farbkanal geöffnet werden, durch den der gerade benötigte Lack zugeführt wird. In vielen Anwendungen kann eine Zufuhr von Lacken mit mehr als 10 oder 20 verschiedenen Farben notwendig sein. Eine derartige Farbwechselvorrichtung oder Wechseleinheit für Beschichtungsmaterial ist beispielsweise aus der EP 1 859 872 A2 bekannt.

Vor jedem Farbwechsel muss die zentrale, vom Farbwechsler zur jeweiligen Applikationseinrichtung, beispielsweise einen Zerstäuber, führende und in dieser mündende lackführende Leitung von Resten des zuvor verwendeten Lackes gereinigt werden. Auf diese Weise wird gewährleistet, dass sich Lacke unterschiedlicher Farben bei der Zuführung zu einer Abnahmestelle, beispielsweise einer Applikationseinrichtung oder zu einem Zerstäuber, direkt nach dem Farbwechsel nicht vermischen. Dadurch würde die Qualität der Lackierung stark beeinträchtigt. Der bei einer derartigen Reinigung der lackführenden Leitung aus dieser entfernte Lack ist gewissermaßen der Ausschuss und somit verloren gegangener Lack, der für die Lackierung nicht mehr eingesetzt werden kann. Je länger und größer die lackführende Leitung ist, umso größere Mengen von Lack müssen vor jedem Farbwechsel entsorgt werden. Dadurch werden gerade bei Großanlagen erhebliche Kosten verursacht, so dass ein allgemeines Bedürfnis besteht, diese Mengen verlorengegangenen Lacks möglichst weitgehend zu minimieren.

Bei einem derartigen Reinigungsvorgang wird üblicherweise zunächst die sich gegebenenfalls noch in der lackführenden Leitung befindliche Restlackmenge mittels eines geeignet gewählten Schiebemediums aus der jeweiligen lackführenden Leitung ausgeschoben. Als Schiebemedium kann dabei beispielsweise Druckluft oder vorzugsweise auch eine Reinigungs- oder Spülflüssigkeit verwendet werden, über die sich in der Leitung eventuell noch befindenden Lackreste abgelöst und mit ausgetragen werden. Anschließend wird auch die gegebenenfalls verwendete Spülflüssigkeit in geeigneter Weise, beispielsweise mittels Druckluft oder dergleichen, aus der lackführenden Leitung ausgeschoben, so dass diese nunmehr mit dem neuen Lack befüllt werden kann. Bei dieser Neubefüllung der lackführenden Leitung mit Lack wird dieser in die Leitung eingeschoben, wobei das sich noch in der Leitung befindliche Medium, beispielsweise Luft oder die Reinigungs- oder Spülflüssigkeit, von diesem verdrängt wird. Sobald die lackführende Leitung auf ihrer gesamten Länge vom Farbwechsler bis hin zur Abnahmestelle, insbesondere der Applikationseinrichtung oder einem Zerstäuber, mit dem neuen Lack befüllt ist, steht die Anlage wieder zur Ausbringung des Lacks zur Verfügung.

Um bei einem derartigen Reinigungs- oder Spülvorgang den erforderlichen Medienwechsel in der lackführenden Leitung besonders zuverlässig und in vergleichsweise kurzer Zeit zur ermöglichen, ist die lackführende Leitung üblicherweise endseitig in einem Bereich nahe der Einmündung in die Applikationseinrichtung oder den Zerstäuber an eine mit einem Absperrventil (auch als "Dump-Ventil" bezeichnet) absperrbare Zweig- oder Stichleitung angeschlossen, über die das verbrauchte Spülmedium der Entsorgung zugeführt werden kann. Dieses Absperrventil wird üblicherweise derart betrieben, dass das in der lackführenden Leitung verwendete Spülmedium über dieses Ventil abgeführt werden kann; das Absperrventil öffnet somit während des Spül- oder Reinigungsprozesses. Anschließend, während des Andrückens des neuen Lacks in der lackführenden Leitung, wird die sich in dieser Phase in der lackführenden Leitung üblicherweise befindliche Luftsäule ebenfalls über das Absperrventil abgeleitet. Sobald die lackführende Leitung vollständig mit dem neuem Lack gefüllt ist, tritt aus der mit dem Absperrventil absperrbaren Stichleitung anstelle von Luft nunmehr der neue Lack aus. Sobald dies festgestellt wird, wird das Absperrventil und über dieses die Stichleitung geschlossen. Der Spül- und Farbwechselvorgang ist sodann beendet, und der neue Lack kann nunmehr über die an die lackführende Leitung angeschlossene Abnahmestelle oder Applikationseinrichtung ausgebracht werden.

Der Erfindung liegt die Aufgabe zugrunde, ein Absperrventil der oben genannten Art anzugeben, das für einen Einsatz in einer derartigen Lackieranlage besonders geeignet ist, wobei insbesondere die während eines Farbwechsels in Kauf zu nehmenden Lackverluste noch weiter minimiert werden sollen. Des Weiteren soll eine hierfür besonders geeignete Lackieranlage angegeben werden.

Bezüglich des Absperrventils wird diese Aufgabe erfindungsgemäß dadurch gelöst, dass die Arbeitsposition des zur Begrenzung des Hubwegs des Hubkolbens in dessen Öffnungsrichtung gesehen vorgesehenen Kolbenanschlags pneumatisch einstellbar ist.

Die Erfindung geht von der Überlegung aus, dass zur Minimierung der in Kauf zu nehmenden Lackverluste bei einem Farbwechsel sämtliche Verlustlackmengen konsequent gering gehalten werden sollten. Vorliegend wird hierbei der Erkenntnis Rechnung getragen, dass als eine dieser Verlustlackmengen auch diejenige Lackmenge anzusehen ist, die bei der Neubefüllung der lackführenden Leitung am Absperrventil eintrifft und durch dieses austritt, bevor das Absperrventil geschlossen wird. Hierbei ist nämlich zu berücksichtigen, dass aus Gründen der zeitlichen Effizienz und hoher Prozessgeschwindigkeiten das Absperr- oder "Dump"-Ventil üblicherweise mit einem vergleichsweise großen Kanalquerschnitt ausgeführt wird, um eine hohe Durchsetzrate des Spülmittels während der Reinigung der lackführenden Leitung zu ermöglichen. Dies führt dazu, dass bei der Neubefüllung der lackführenden Leitung die sich in dieser zunächst befindende Luft ebenfalls mit vergleichsweise hohen Kanalquerschnitten aus dem Absperrventil austritt, bis die neu befüllte Lacksäule am Absperrventil eintrifft und schwallartig aus diesem austritt. Das Absperrventil sollte daher gezielt dafür ausgelegt sein, diesen als Verlustlack in Kauf zu nehmenden Lackschwall möglichst gering zu halten.

Um dies zu ermöglichen, sollte das Absperrventil für einen Wechsel zwischen zumindest zwei Betriebsmodi geeignet ausgeführt sein. Als erster Betriebsmodus, der insbesondere für den eigentlichen Spülvorgang und den damit verbundenen Austritt des Spülmediums vorgesehen ist, sollte das Absperrventil dabei mit einem vergleichsweise großgehaltenen Kanalquerschnitt betreibbar sein. In einem zweiten Betriebsmodus hingegen, der insbesondere für die Phase des Andrückens des Lacks vorgesehen ist, bei der die in der Leitung befindliche Luftsäule durch das Absperrventil ausgedrückt wird, sollte dieses mit einem vergleichsweise kleingehaltenen freien Kanalquerschnitt betrieben werden. Durch diesen vergleichsweise kleingehaltenen Kanalquerschnitt kann zwar die Luftsäule vergleichsweise ungehindert entweichen; sobald jedoch die vergleichsweise viskose Lacksäule am Ventil eintrifft, wird die Durchströmung durch den vergleichsweise geringen Kanalquerschnitt erheblich behindert, und eine nur gering gehaltene Lackmenge tritt aus dem Ventil aus, bevor es ganz geschlossen werden kann.

Zur Bereitstellung dieser mindestens zwei Betriebsmodi sollte das Absperrventil mit einem veränderbaren oder einstellbaren Anschlag für den Absperrkörper ausgerüstet sein. Auf besonders einfache Weise ist dies erreichbar, in dem der für die Positionierung des Absperrkörpers vorgesehene druckbetätigte Hubkolben in seinem Hubweg durch einen einstellbaren Kolbenanschlag begrenzt ist. Eine apparativ besonders einfach gehaltene und damit besonders bevorzugte Bauweise ist aber erreichbar, indem der Kolbenanschlag - ebenso wie der eigentliche Hubkolben - pneumatisch ansteuerbar ist, wobei besonders bevorzugt für beide der gleiche Ansteuerdruck vorgesehen ist.

Vorteilhafterweise weist der Kolbenanschlag dabei hinsichtlich seiner Positionierbarkeit in Öffnungsrichtung des Hubkolbens gesehen einen Verstellbereich von bis zu 10 mm, besonders bevorzugt von höchstens 3 mm auf.

In weiterer vorteilhafter Ausgestaltung ist der Kolbenanschlag von einem in einem Zylinder laufenden Arbeitskolben getragen und geführt.

Eine besonders einfache und kompakte Bauweise ist dabei erreichbar, indem der Arbeitskolben in weiterer vorteilhafter Ausgestaltung konzentrisch zum Hubkolben geführt ist. Besonders bevorzugt weist der Arbeitskolben dabei einen größeren Durchmesser auf als der Hubkolben. Durch diese Auslegung ist eine besonders einfach gehaltene Bauweise ermöglicht, da hierdurch eine Beaufschlagung beider Kolben mit demselben Arbeitsdruck ermöglicht wird, so dass das entsprechende druckführende System vergleichsweise einfach gehalten werden kann. Trotz eines für beide Kolben gleichen pneumatischen Arbeitsdrucks kann nämlich durch diese Bauweise die auf den Arbeitskolben wirkende Kraft größer als die auf den Hubkolben wirkende Kraft gehalten werden, so dass der angesteuerte oder druckbeaufschlagte Hubkolben den gleichzeitig angesteuerten oder druckbeaufschlagten Arbeitskolben nicht aus seiner Position verdrängen kann.

Vorteilhafterweise ist dem Arbeitskolben seinerseits ebenfalls ein zur Begrenzung seines Hubwegs vorgesehener Hubbegrenzer zugeordnet. Damit ist sichergestellt, dass bei einer Ansteuerung des Arbeitskolbens - ausreichenden Ansteuerdruck zur Überwindung der Feder-Rückhaltekraft vorausgesetzt - eine definierte, vom Ansteuerdruck unabhängige Arbeitsposition eingenommen wird, so dass entsprechend auch die Kanalquerschnitte definierte Werte annehmen. Der Hubbegrenzer ist dabei seinerseits in besonders vorteilhafter Ausgestaltung in seiner Arbeitsposition einstellbar. Damit können die Kanalquerschnitte bei Öffnung des Ventils geeignet und an die individuellen Anlagenerfordernisse angepasst eingestellt werden.

Auf besonders einfache Weise ist dies erreichbar, indem besonders bevorzugt der dem Arbeitskolben zugeordnete Hubbegrenzer über eine Rändelschraube positionerbar ist. Die Rändelschraube ist dabei besonders bevorzugt mit Mitteln zur Verdrehsicherung, zweckmäßigerweise mit einer Anzahl von Gewindestiften, versehen so dass nach geeigneter Positionierung und Justierung der Komponenten ein zuverlässiger Anlagenbetrieb mit konstanten Betriebsparametern ermöglicht ist.

Vorteilhafterweise ist der Hubbegrenzer innerhalb des Arbeitskolbens angeordnet, so dass eine besonders kompakte Bauweise ermöglicht ist.

In vorteilhafter Ausgestaltung ist der Absperrkörper als Ventilnadel ausgeführt. Diese weist in weiterer vorteilhafter Ausgestaltung eine austauschbare und/oder einschraubbarer Nadelspitze auf, so dass das Absperrventil auf besonders einfache Weise in Stand gehalten werden kann.

Durch die Ausgestaltung des Absperrkörpers als Ventilnadel ist auf besonders einfache

Weise erreichbar, dass der Hub der vorzugsweise kegelförmig ausgebildeten Ventilnadel aus ihrem Nadelsitz den freien Kanalquerschnitt bestimmt. Damit kann durch geeignete Veränderung der Hubhöhe eine entsprechende Veränderung des freien Kanalquerschnitts bewirkt werden.

Bezüglich der Lackieranlage wird die genannte Aufgabe gelöst, indem eine Anzahl von jeweils in einer Abnahmestelle oder Applikationseinrichtung mündenden lackführenden Leitungen und/oder die von diesen abzweigenden Zweig- oder Stichleitungen jeweils mit einem Absperrventil der genannten Art absperrbar sind.

Die mit der Erfindung erzielten Vorteile bestehen insbesondere darin, dass durch den pneumatisch angesteuerten einstellbaren Kolbenanschlag des das Absperrorgan tragenden und führenden Hubkolbens auf besonders einfache Weise, nämlich durch geeignete Positionierung des Kolbenanschlags, eine Umschaltung zwischen zwei oder mehr Betriebsmodi für das Absperrventil erreichbar ist. Damit kann durch eine geeignete Ansteuerung des Kolbenanschlags der Hub des Hubkolbens in einem ersten Betriebsmodus derart eingestellt werden, dass ein vergleichsweise großer freier Kanalquerschnitt im Bereich des geöffneten Ventils entsteht. Andererseits kann durch geeignete Begrenzung des Kolbenhubs in einem zweiten Betriebsmodus sichergestellt werden, dass bei geöffnetem Ventil ein nur vergleichsweise gering gehaltener Kanalquerschnitt vorliegt. Damit ist durch das Absperrventil einerseits im Spülbetrieb ein vergleichsweise großer freier Kanalquerschnitt einstellbar, so dass das Spülmittel die lackführende Leitung mit vergleichsweise hoher, eine hohe Prozessgeschwindigkeit begünstigender Durchflussrate durchströmen kann. Andererseits kann aber auch sichergestellt werden, dass bei der Entlüftung der lackführenden Leitung während des Andrückens ein vergleichsweise geringer freier Kanalquerschnitt eingestellt werden kann, der zwar ein problemloses Entweichen der in der lackführenden Leitung befindlichen Luftmenge ermöglicht, gleichzeitig aber zu große Schwallverluste beim Eintreffen des vergleichsweise viskosen Lacks am Ventilausgang zuverlässig verhindert.

Ein Ausführungsbeispiel der Erfindung wird anhand einer Zeichnung näher erläutert. Darin zeigen:
- FIG. 1:: ausschnittsweise eine Lackieranlage mit einer von einem Farbwechsler zu einer Applikationseinrichtung führenden lackführenden Leitung,
- FIG. 2:: ein Absperrventil für die Lackieranlage gemäß FIG. 1, und
- FIG. 3a - 3c: ausschnittsweise das Absperrventil gemäß FIG. 2 in unterschiedlichen Betriebszuständen.

Gleiche Teile sind in allen Figuren mit denselben Bezugszeichen versehen.

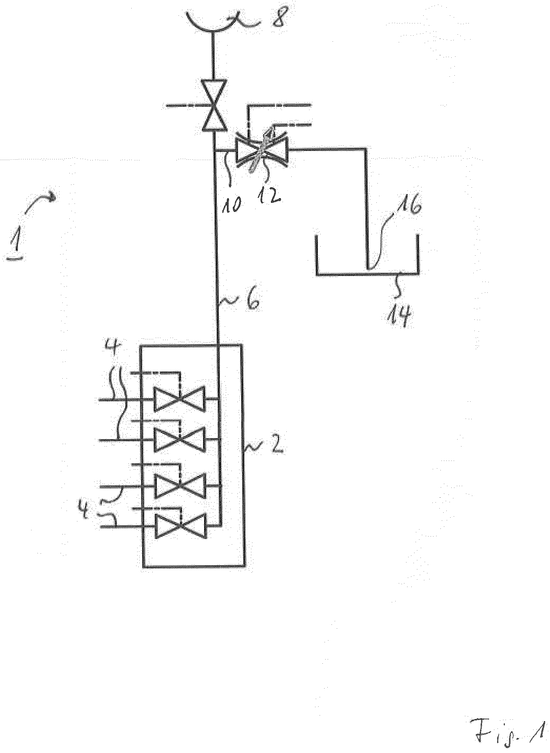

Die in FIG. 1 lediglich ausschnittsweise gezeigte Lackieranlage 1 ist zur Ausbringung auch vergleichsweise gering gehaltener Lackmengen verschiedener Lacksorten vorgesehen und damit insbesondere zum Beschichten von Kraftfahrzeugteilen wie Karosserien oder dergleichen auch in Kleinserien besonders geeignet. Dazu umfasst die Lackieranlage 1 einen Farbwechsler 2, der unter Rückgriff auf an sich bekannte Bauteile und Komponenten an eine Anzahl von Lackzufuhrleitungen 4 im Rahmen eines Lackversorgungssystems angeschlossen ist. Ausgangsseitig ist der Farbwechsler 2 an eine lackführende Leitung 6 angeschlossen, die einen zentralen Farbkanal zur lackseitigen Verbindung des Farbwechslers 2 mit der endseitig angeordneten Applikationseinrichtung 8, insbesondere einem Zerstäuber, bildet. Im Mündungsbereich der lackführenden Leitung 6 in die Applikationseinrichtung 8 zweigt von der lackführenden Leitung 6 eine Zweig- oder Stichleitung 10 ab, die ihrerseits mit einem Absperrventil 12 absperrbar ist und ausgangsseitig in einen Entsorgungsbehälter 14 mündet. Die Zweig- oder Stichleitung 10 dient dabei zum bedarfsweisen Abführen von Spülmittel oder dergleichen im Zusammenhang mit der Reinigung der lackführenden Leitung 6 bei einem Farbwechsel. Das auch als "Dump-Ventil" bezeichnete Absperrventil 12 gibt dabei die Zweig- oder Stichleitung 10 frei, wenn unter Umgehung der Applikationseinrichtung 8 das Abführen des in der lackführenden Leitung 6 befindlichen Mediums beispielsweise zu Spül- oder Entsorgungszwecken gewünscht ist.

Bei einem derartigen Spülvorgang wird die lackführende Leitung 6 zunächst mit dem über eine der Leitungen 4 zugeführten Spülmittel beaufschlagt, das über die Zweig- oder Stichleitung 10 wieder aus der lackführenden Leitung 6 abgeführt wird. Während des Spülvorgangs ist das Absperrventil 12 somit geöffnet. Nach dem Austritt des Spülmittels, das beispielsweise mittels über eine der Leitungen 4 zugeführter Druckluft aus der lackführenden Leitung 6 herausgedrückt werden kann, wird die lackführende Leitung 6 mit dem neu vorgesehenen Lack befüllt. Während dieser Phase des sogenannten "Andrückens" wird die Lacksäule des neu vorgesehenen Lacks in die lackführende Leitung 6 eingeschoben, wobei die sich noch in der lackführenden Leitung 6 befindliche Luftsäule durch das Absperrventil 12 ausgeschoben wird. In dieser Phase ist das Absperrventil 12 ebenfalls geöffnet. Sobald die sich noch in der Leitung 6 befindliche Restluft vollständig ausgeschoben ist, trifft die Lacksäule im Endbereich der lackführenden Leitung 6 und somit im Bereich des Absperrventils 12 ein. Nach vollständigem Ausschieben der Restluft beginnt der neueingefüllte Lack, aus dem Absperrventil 12 in Richtung der Mündungsöffnung 16 der Stichleitung 10 auszutreten. Sobald dies der Fall ist, wird das Absperrventil 12 geschlossen, und die Lackieranlage 1 ist zur Ausbringung des neueingefüllten Lacks betriebsbereit.

Das Absperrventil 12 ist gezielt dafür ausgelegt, die bei einem derartigen Farbwechsel auftretenden Lackverluste in Form des bei am Absperrventil 12 eintreffender Lacksäule aus diesem austretenden Lackschwalls gezielt zu minimieren. Dazu ist das Absperrventil 12 für zumindest zwei unterschiedliche Betriebszustände ausgelegt, wobei in einem ersten, für die Spülphase vorgesehenen Betriebszustand bei geöffnetem Absperrventil 12 ein vergleichsweise großer freier Kanalquerschnitt freigegeben wird. Dem gegenüber wird in einem zweiten, für die Entlüftungsphase der lackführenden Leitung 6 vorgesehenen Betriebszustand bei geöffnetem Absperrventil 12 lediglich ein vergleichsweise geringer Kanalquerschnitt freigegeben, der zwar ein ungehindertes Entweichen der Luft aus der lackführenden Leitung 6 ermöglicht, aber das schwallartige Austreten des eintreffenden Lacks weitgehend begrenzt.

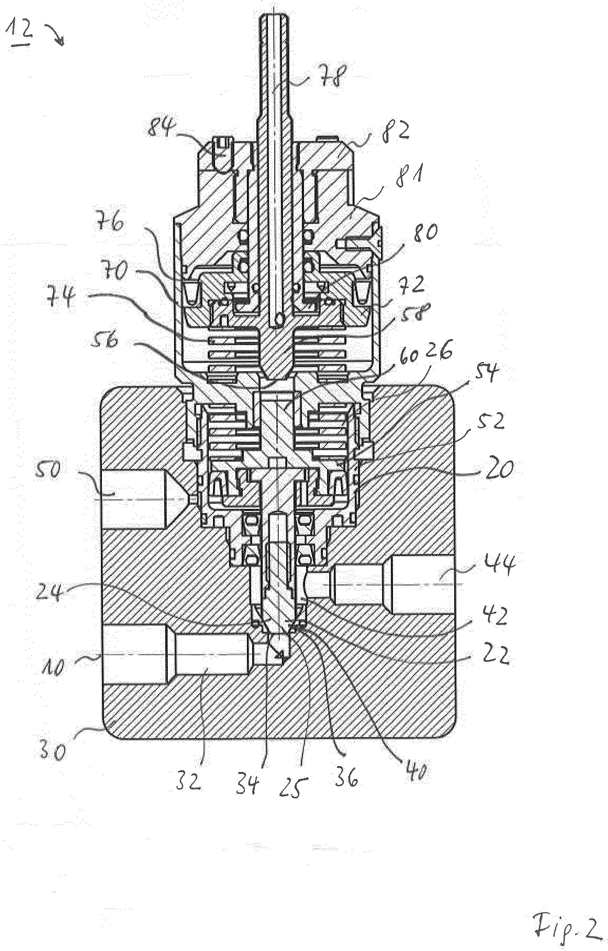

Wie der Darstellung in Längsschnitt in FIG. 2. entnehmbar ist, ist das Absperrventil 12 als pneumatisch betätigbares Ventil ausgeführt. Dazu umfasst das Absperrventil 12 ein Innengehäuse 20, in dem eine als Absperrkörper 22 vorgesehene Ventilnadel 24 entlang ihrer Achse verschiebbar gelagert ist. Die Ventilnadel 24 ist mit einer austauschbaren Nadelspitze 25 versehen und von einer Druckfeder 26 in Schließstellung beaufschlagt.

Das Absperrventil 12 kann als eigenständiges, separates Bauteil ausgeführt sein. Im Ausführungsbeispiel ist das Absperrventil 12 jedoch in der Art einer integrierten Ausführung in einen Ventilblock 30 eingeschraubt. In diesem ist ein Einlasskanal 32 geführt, der eingangsseitig mit der Zweig- oder Stichleitung 10 verbunden ist. Der Einlasskanal 32 mündet in einer kreisförmigen Auslassöffnung 34, die mit ihrer konisch ausgeführten Flanke 36 einen Ventilsitz für die Ventilnadel 24 bzw. deren Nadelspitze 25 bildet. An diesem durch die Flanke 36 gebildeten Ventilsitz liegt in der Schließstellung des Absperrventils 12 die ebenfalls konisch ausgeführte, sich in Richtung zur Auslassöffnung 34 hin verjüngende Dichtfläche 40 der Ventilnadel 24 an. Über die Auslassöffnung 34 ist der Einlasskanal 32 mit dem Innenraum 42 des Absperrventils 12 verbunden, der seinerseits mit dem Auslasskanal 44 verbunden ist.

Das Absperrventil 12 ist pneumatisch per Druckluft betätigt. Die Druckluft wird über einen Druckluftkanal 50 einem dem Absperrventil 12 zugeordneten Steuergehäuse 52 zugeführt. Das Steuergehäuse 52 bildet dabei einen Druckzylinder, in dem ein Hubkolben 54 gelagert und geführt ist. Der Hubkolben 54 trägt dabei die Ventilnadel 24, so dass eine Veränderung der Position des Hubkolbens 54 innerhalb des Steuergehäuses 52 zu einer entsprechenden Positionsveränderungen der Ventilnadel 24 führt. Die über den Druckluftkanal 50 zugeführte Druckluft bewegt dabei den Hubkolben 54 entgegen der von der Druckfeder 26 aufgebrachten Federkraft, so dass das Ventil bei ausreichend hoher Druckbeaufschlagung des Hubkolbens 54 aus seiner Schließstellung heraus öffnet.

Die Hubhöhe des Hubkolbens 54 ist in seiner Öffnungsrichtung gesehen durch einen Kolbenanschlag 56 begrenzt. Im Ausführungsbeispiel wird der Kolbenanschlag 56 durch die Stirnfläche des Anschlagszapfens 58 gebildet, an die ein korrespondierender, am Hubkolben 54 angeordneter Anschlagszapfen 60 anschlägt.

Um die vorgesehene Umstellung zwischen verschiedenen Betriebsmodi des Absperrventils 12 zu ermöglichen, ist der zur Begrenzung des Hubwegs des Hubkolbens 54 vorgesehenen Kolbenanschlag 56 einstellbar. Im Ausführungsbeispiel ist dabei eine pneumatische Ansteuerung des Kolbenanschlags 56 vorgesehen. Dazu ist der den Kolbenanschlag 56 bildende Anschlagszapfen 58 von einem in einem Zylinder 70 laufenden und geführten Arbeitskolben 72 getragen und geführt. Der Arbeitskolben 72, der mit seiner Zentralachse konzentrisch zur Zentralachse des Hubkolbens 54 in einem gemeinsamen, durch das Innengehäuse 20 und den Zylinder 70 gebildeten Gehäuse geführt ist und einen im Vergleich zum Hubkolben 54 größeren Durchmesser aufweist, ist dabei ebenfalls von einer Druckfeder 74 in einer Ruheposition beaufschlagt. Gegen die Federkraft der Druckfeder 74 wirkt der Arbeitsdruck in der Druckkammer 76, so dass durch geeignete Druckbeaufschlagung der Druckkammer 76 der Arbeitskolben 72 und mit diesem der Kolbenanschlag 56 betriebsabhängig positioniert werden kann. Die Druckbeaufschlagung der Druckkammer 76 kann dabei im Sinne einer pneumatischen Ansteuerung über den entlang der Zentralachse von Hub- und Arbeitskolben 54, 72 geführten Druckkanal 78 eingebrachten pneumatischen Ansteuerimpuls erfolgen. Die Ansteuerung des Arbeitskolbens 72 erfolgt somit durch den in der Art einer Hohlnadel ausgeführten Druckkanal 78 "von oben", wobei der Ansteuerdruck innerhalb des Zylinders 70 auf die "obere", von dem Anschlagszapfen 58 abgewandte Seite des Arbeitskolbens 72 geleitet wird.

In der dargestellten Ausführungsform ist die pneumatische Ansteuerung des Arbeitskolbens 72 somit durch den Zylinderdeckel 81 in die Druckkammer 76 geführt; alternativ kann die pneumatische Ansteuerung des Arbeitskolbens 72 aber auch auf dessen dem Kolbenanschlag 56 abgewandte Seite geführt sein.

Um eine mechanisch definierte Einstellung der Öffnungswege des Systems zu ermöglichen, ist auch für den Arbeitskolben 72 ein in seiner Positionierung verstellbarer Hubbegrenzer 80 vorgesehen. Dieser ist von einer im Zylinder 70 angeordneten, mit einem Innengewinde des Zylinderdeckels 81 in Eingriff stehenden Rändelschraube 82 getragen. Eine Verdrehung der Rändelschraube 82 wird dabei aufgrund des Gewindeeingriffs im Zylinderdeckel 81 in eine Längsverschiebung und demzufolge in eine Längsverschiebung des Hubbegrenzers 80 umgesetzt, so dass eine manuelle Positionierung des Hubbegrenzers 80 möglich ist. Zur Verdrehsicherung einer ordnungsgemäß positionierten Rändelschraube 82 ist in deren Randbereich ein oder mehrere Gewindestifte 84 vorgesehen.

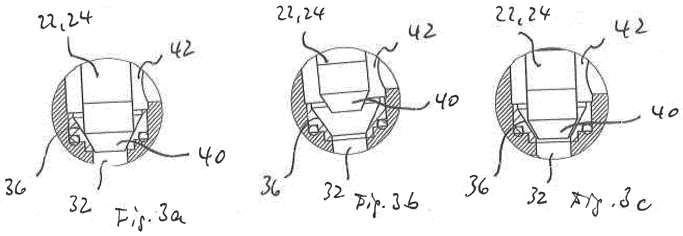

Die grundsätzliche Wirkungsweise des Absperrventils 12 ist in der ausschnittsweisen Vergrößerung des Bereichs des Ventilsitzes der Ventilnadel 24 in den FIG. 3 a-c näher erläutert. In FIG. 3a ist dabei der geschlossene Zustand des Absperrventils 12 gezeigt, in dem die konisch ausgeführte Dichtfläche 40 der Ventilnadel 24 vollständig an der ebenfalls konisch ausgeführten Flanke 36 der Austrittsöffnung 34 anliegt. Demgegenüber zeigt FIG. 3b das Absperrventil 12 in geöffnetem Zustand in einem ersten Betriebsmodus, der für die Phase des eigentlichen Spülvorgangs mit erwünscht hohem Mediendurchsatz durch das Absperrventil 12 vorgesehen ist. In diesem ersten Betriebszustand wird der Arbeitskolben 72 durch die Federkraft der Druckfeder 74 in seinem Ruhezustand und damit der Anschlagszapfen 58 in seiner Ruheposition und damit einem vergleichsweise großen Abstand zum Anschalgszapfen 60 gehalten. Damit wird der Kolbenanschlag 56 ebenfalls von der Ventilnadel 24 weg positioniert, so dass für den Hubkolben 54 ein vergleichsweise großer Hubweg freigegeben wird. Bei Öffnung des Absperrventils 12 in diesem Betriebszustand kann die Ventilnadel 24 somit vergleichsweise weit aus ihrem Ventilsitz zurückweichen, so dass im Bereich der Auslassöffnung 34 ein vergleichsweise großer Kanalquerschnitt freigegeben wird.

Demgegenüber ist die FIG. 3c das Absperrventil 12 in geöffneten Zustand für einen zweiten Betriebszustand gezeigt, bei dem lediglich ein vergleichsweise geringer Kanalquerschnitt freigegeben werden soll. Dieser zweite Betriebszustand ist für die Entlüftungsphase der lackführenden Leitung 6 während des Andrückens vorgesehen, so dass die in der lackführenden Leitung 6 befindliche Restluft vergleichsweise einfach entweichen kann, wohingegen eintreffender Lack das Absperrventil 12 nur in vergleichsweise geringen Mengen passieren kann. Dazu wird in diesem zweiten Betriebszustand der Druckraum 76 des Arbeitskolbens 72 mit einem Ansteuerdruck beaufschlagt, so dass der Arbeitskolben 72 in Richtung des Anschlagszapfens 60 bewegt wird. Dabei wird der Anschlagszapfen 58 in eine im Wesentlichen durch die Positionierung der Rändelschraube 82 definierten Position gebracht. Demzufolge befindet sich der Kolbenanschlag 56 in diesem Betriebszustand vergleichsweise nah am Ventilsitz, so dass der Hubweg des Hubkolbens 54 auf einen vergleichsweise geringen Bereich begrenzt bleibt. Demzufolge kann sich die Ventilnadel 24 nur in vergleichsweise geringem Maße aus ihrem Ventilsitz bewegen, so dass der freigegebene Kanalquerschnitt vergleichsweise gering bleibt.

Das Ausmaß der Verschiebung des Arbeitskolbens 72 bei Ansteuerung und damit die Veränderung des Hubwegs des Hubkolbens 54 bei der Umschaltung zwischen diesen beiden Betriebsmodi kann durch die entsprechende Positionierung des Hubbegrenzers 80 mittels der Rändelschraube 82 justiert und voreingestellt werden. Damit kann eine bedarfsgerecht angepasste Voreinstellung der entsprechenden freien Kanalquerschnitte und damit der Durchflussmengen in den beiden Betriebsmodi entsprechend den individuellen Anlagenerfordernissen vorgenommen werden.

### Bezugszeichenliste

- 1: Lackieranlage
- 2: Farbwechsler
- 4: Lackzufuhrleitung
- 6: lackführende Leitung
- 8: Applikationseinrichtung
- 10: Zweig- und Stichleitung
- 12: Absperrventil
- 14: Entsorgungsbehälte
- 16: Mündungsöffnung
- 20: Innengehäuse
- 22: Absperrkörper
- 24: Ventilnadel
- 25: Nadelspitze
- 26: Druckfeder
- 30: Ventilblock
- 32: Einlasskanal
- 34: Auslassöffnung
- 36: Flanke
- 40: Dichtfläche
- 42: Innenraum
- 44: Auslasskanal
- 50: Druckluftkanal
- 52: Steuergehäuse
- 54: Hubkolben
- 56: Kolbenanschlag
- 58: Anschlagszapfen
- 60: Anschlagszapfen
- 70: Zylinder
- 72: Arbeitskolben
- 74: Druckfeder
- 76: Druckkammer
- 78: Druckkanal
- 80: Hubbegrenzer
- 81: Zylinderdeckel
- 82: Rändelschraube
- 84: Gewindestift

## Patentansprüche

1. Absperrventil (12), insbesondere zur Absperrung eines lackführenden Kanals in einer Lackieranlage (1), mit einem pneumatisch über einen druckbetätigten Hubkolben (54) von einer Schließ- in eine Öffnungsposition bewegbaren Absperrkörper (22), wobei die Arbeitsposition eines zur Begrenzung des Hubwegs des Hubkolbens (54) in dessen Öffnungsrichtung gesehen vorgesehenen Kolbenanschlags (56) einstellbar ist, **dadurch gekennzeichnet, dass** die Arbeitsposition des Kolbenanschlags (56) durch pneumatische Ansteuerung einstellbar ist.

2. Absperrventil (12) nach Anspruch 1, dessen Kolbenanschlag (56) hinsichtlich seiner Positionierbarkeit in Öffnungsrichtung des Hubkolbens (54) gesehen einen Verstellbereich von mindestens 0 und höchstens 10 mm, vorzugsweise höchstens 3 mm, aufweist.

3. Absperrventil (12) nach Anspruch 1 oder 2, dessen Kolbenanschlag (56) von einem in einem Zylinder (70) laufenden Arbeitskolben (72) getragen und geführt ist.

4. Absperrventil (12) nach Anspruch 3, dessen Arbeitskolben (72) konzentrisch zum Hubkolben (54) geführt ist.

5. Absperrventil (12) nach Anspruch 3 oder 4, dessen Arbeitskolben (72) ein zur Begrenzung seines Hubwegs vorgesehener Hubbegrenzer (80) zugeordnet ist, dessen Arbeitsposition einstellbar ist.

6. Absperrventil (12) nach Anspruch 5, dessen Hubbegrenzer (80) innerhalb des Arbeitskolbens (72) angeordnet ist.

7. Absperrventil (12) nach Anspruch 5 oder 6, dessen Hubbegrenzer (80) über eine Rändelschraube (82) positionierbar ist.

8. Absperrventil (12) nach Anspruch 7, dessen Rändelschraube (82) zur Verdrehsicherung mit einer Anzahl von Gewindestiften (84) versehen ist.

9. Absperrventil (12) nach einem der Ansprüche 3 bis 8, dessen Arbeitskolben (72) einen größeren Durchmesser aufweist als der Hubkolben (54).

10. Absperrventil (12) nach einem der Ansprüche 3 bis 9, dessen Hubkolben (54) und dessen Arbeitskolben (72) konzentrisch in einem gemeinsamen Gehäuse (20, 70) geführt sind.

11. Absperrventil (12) nach einem der Ansprüche 1 bis 10, dessen Absperrkörper (22) als Ventilnadel (24) ausgeführt ist.

12. Absperrventil (12) nach Anspruch 11, dessen Ventilnadel (24) eine austauschbare Nadelspitze (25) aufweist.

## Claims

1. Shut-off valve (12), in particular for shutting off a paint-conducting channel in a painting installation (1), comprising a shut-off body (22) which is pneumatically movable from a closed position into an open position via a pressure-operated lifting piston (54), the working position of a piston stop (56) provided for limiting the lifting path of the lifting piston (54) when viewed in the opening direction thereof being adjustable, **characterised in that** the working position of the piston stop (56) is adjustable via pneumatic control.

2. Shut-off valve (12) according to claim 1, the piston stop (56) of which has an adjustment range of at least 0 and at most 10 mm, preferably at most 3 mm, with respect to the positionability of said piston stop when viewed in the opening direction of the lifting piston (54).

3. Shut-off valve (12) according to either claim 1 or claim 2, the piston stop (56) of which is supported and guided by a working piston (72) running in a cylinder (70).

4. Shut-off valve (12) according to claim 3, the working piston (72) of which is concentrically guided relative to the lifting piston (54).

5. Shut-off valve (12) according to either claim 3 or claim 4, the working piston (72) of which is assigned a lift limiter (80) for limiting the lifting path of said working piston, the working position of said lift limiter being adjustable.

6. Shut-off valve (12) according to claim 5, the lift limiter (80) of which is arranged within the working piston (72).

7. Shut-off valve (12) according to either claim 5 or claim 6, the lift limiter (80) of which is positionable via a knurled-head screw (82).

8. Shut-off valve (12) according to claim 7, the knurled-head screw (82) of which is equipped with a number of threaded pins (84) for preventing rotation.

9. Shut-off valve (12) according to any of claims 3 to 8, the working piston (72) of which has a greater diameter than the lifting piston (54).

10. Shut-off valve (12) according to any of claims 3 to 9, the lifting piston (54) of which and the working piston (72) of which are concentrically guided in a common housing (20, 70).

11. Shut-off valve (12) according to any of claims 1 to 10, the shut-off body (22) of which is designed as a valve needle (24).

12. Shut-off valve (12) according to claim 11, the valve needle (24) of which has an exchangeable needle tip (25).

## Revendications

1. Vanne d'arrêt (12), en particulier pour le blocage d'une conduite transportant de la peinture dans une installation de peinture (1), avec un corps d'arrêt (22) pouvant être déplacé de manière pneumatique d'une position de fermeture vers une position d'ouverture par le biais d'un piston de levage (54) actionné par pression, dans laquelle la position de travail d'une butée de piston (56) prévue pour la limitation de la course de levage du piston de levage (54) vue dans la direction d'ouverture de celui-ci est réglable, **caractérisée en ce que** la position de travail de la butée de piston (56) est réglable par une commande pneumatique.

2. Vanne d'arrêt (12) selon la revendication 1, dont la butée de piston (56) présente, en ce qui concerne son aptitude au positionnement, vue dans la direction d'ouverture du piston de levage (54), une plage de réglage d'au moins 0 et au plus 10 mm, de préférence au plus 3 mm.

3. Vanne d'arrêt (12) selon la revendication 1 ou 2, dont la butée de piston (56) est portée et guidée par un piston de travail (72) se déplaçant dans un cylindre (70).

4. Vanne d'arrêt (12) selon la revendication 3, dont le piston de travail (72) est guidé de manière concentrique par rapport au piston de levage (54).

5. Vanne d'arrêt (12) selon la revendication 3 ou 4, au piston de travail (72) de laquelle est affecté un limiteur de levage (80), prévu pour la limitation de sa course de levage, dont la position de travail est réglable.

6. Vanne d'arrêt (12) selon la revendication 5, dont le limiteur de levage (80) est disposé à l'intérieur du piston de travail (72).

7. Vanne d'arrêt (12) selon la revendication 5 ou 6, dont le limiteur de levage (80) peut être positionné par le biais d'une vis moletée (82).

8. Vanne d'arrêt (12) selon la revendication 7, dont la vis moletée (82) est munie d'un certain nombre de broches filetées (84) pour bloquer la rotation.

9. Vanne d'arrêt (12) selon l'une des revendications 3 à 8, dont le piston de travail (72) présente un diamètre plus grand que le piston de levage (54).

10. Vanne d'arrêt (12) selon l'une des revendications 3 à 9, dont le piston de levage (54) et son piston de travail (72) sont guidés de manière concentrique dans un carter (20, 70) commun.

11. Vanne d'arrêt (12) selon l'une des revendications 1 à 10, dont le corps d'arrêt (22) est réalisé en tant qu'aiguille de soupape (24).

12. Vanne d'arrêt (12) selon la revendication 11, dont l'aiguille de soupape (24) présente une pointe d'aiguille (25) remplaçable.
